# EUROPEAN PATENT SPECIFICATION

(11) **EP 3 595 807 B1**
(45) Date of publication and mention of the grant of the patent: **29.09.2021**
(21) Application number: 18728731.3
(22) Date of filing: 15.03.2018
(51) Int. Cl.: B01J 20/04, B01J 20/06, B01J 20/14, B01J 20/26, B01J 20/28, B01J 20/32, C02F 1/28, C02F 1/40, C09K 3/32, E02B 15/00

(54) **METHOD OF USING A SUPERHYDROPHOBIC AND STRONGLY OLEOPHILIC ABSORBENT PRODUCT**
VERFAHREN ZUR VERWENDUNG EINES SUPERHYDROPHOBEN UND STARK OLEOPHILEN ABSORBIERENDEN PRODUKTS
MÉTHODE D'UTILISATION D'UN PRODUIT ABSORBANT SUPERHYDROPHOBE ET FORTEMENT OLÉOPHILE

(30) Priority: 17.03.2017 NO 20170399
(43) Date of publication of application: 22.01.2020
(60) Divisional application: 21191451.0
(73) Proprietor: M Vest Water AS, 5059 Bergen (NO)
(72) Inventor: MUNDHEIM, Atle, N-5632 Omastrand (NO)
(74) Representative: Onsagers AS
(86) International application number: PCT/IB2018/051741
(87) International publication number: WO 2018/167707

(56) References cited:
- WO-A1-2010/144167
- US-A- 5 288 177
- US-A- 5 302 570
- DATABASE WPI Week 201011 Thomson Scientific, London, GB; AN 2010-B11694 XP002783037, -& JP 2010 017665 A (UNIV KAGAWA) 28 January 2010 (2010-01-28)
- JIN GE ET AL: "Pumping through Porous Hydrophobic/Oleophilic Materials: An Alternative Technology for Oil Spill Remediation", ANGEWANDTE CHEMIE, vol. 126, no. 14, 3 March 2014 (2014-03-03), pages 3686-3690, XP055492169, DE ISSN: 0044-8249, DOI: 10.1002/ange.201310151 & Wiley-Vch 2014 ET AL: "Supporting Information: Pumping through Porous Hydrophobic/Oleophilic Materials: An Alternative Technology for Oil Spill Remediation**", , 27 March 2015 (2015-03-27), XP055492173, Retrieved from the Internet: URL:https://onlinelibrary.wiley.com/action /downloadSupplement?doi=10.1002/ange.20131 0151&file=ange_201310151_sm_miscellaneous_ information.pdf [retrieved on 2018-07-12]
- XUEMEI CHEN ET AL: "Continuous Oil-Water Separation Using Polydimethylsiloxane-Functionalized Melamine Sponge", INDUSTRIAL & ENGINEERING CHEMISTRY RESEARCH, vol. 55, no. 12, 18 March 2016 (2016-03-18), pages 3596-3602, XP055492172, ISSN: 0888-5885, DOI: 10.1021/acs.iecr.6b00234

## Description

The present invention relates to a method of using a the product for absorbing oil as set forth in claim 1.

The product consists of an original highly hydrophilic porous calcined granular inorganic material, the main constituent being diatomaceous earth, also called diatoms, and further around 1/3 clay and around 1/10 ashes. This describes calcined Moler with a typical chemical composition of SiO 2 ∼ 75%; Al2O3 ∼ 10%; Fe2O3 ∼ 7%; TiO2 ∼ 1%; MgO ∼ 2%; CaO ∼ 1%; K2O + Na2O2% which is the preferred raw material of the invention, but similarly calcined products of similar composition may also be used. The raw material is made superhydrophobic, that is, the contact angle of the water on the surface of the product is greater or equal to 170 degrees and is rendered highly oleophilic by means of a permanent binding of a siloxane to the metal oxides in the raw material thereby releasing the entire pore volume to the uptake of oil without water absorbing the capacity of the pore volume.

The invention relates to a method of using the product in filter compositions.

### Prior art

It is known that there is a variety of inorganic and organic filter media for adsorption and absorption of oil from water and oil spills. Among others, clay, heat treated bark and walnut shell are the most well-known adsorbents, and active charcoal and zeolite are known as both adsorbent and absorbent. Heat-treated peat moss, cotton and various cellulose products are also known oil absorbers.

As filters in the oil industry, walnut shell filters, amine modified oregano clay filters, and coal filters are most commonly used for the removal of hydrocarbons from an oil contaminated water flow.

It is known that calcined diatomaceous granules can be used for water filtration, and a variety of other filter applications to remove suspended solids. It is also used to some extent to remove oil from water in a process water flow, as the product is highly hydrophobic and has very high affinity for water and absorbs about 110% of its bulk volume, given a grain size of 0.5-0.8 mm. Oil from water absorption capacity is usually, in untreated product, below 40% as the very strong water affinity limits the absorption of oil into the pores. A large fraction of the waste fraction of up to 40%, takes place as adsorption on the surface of the particles, and this oil will easily be washed off and cause leakage of the filter through the flow of high oil concentrations in the process water.

It is also well known that siloxane can be applied as a hydrophobic and oleophilic coating on a surface. It is also known that such coatings normally build 0.5-2 microns thickness.

It is also known that siloxane products can bind with metal oxides by adequate heat treatment.

It is known that diatomaceous is derived from about 110 species of diatoms, of which the largest species are 0.2 mm in diameter and the smallest are 0.02 - 0.04 mm in diameter. The diatomics extracted silica from the water, to create a very porous skeleton of amorphous SiO2. The skeleton consists of thousands of thin-walled tubes where about 90% of these tubes have a diameter below 1 micron. WO 2010/144167 discloses the vapor deposition coating on a wide variety of porous natural materials to modify their surface properties so that water repellent and selective absorption of oil from water is imparted.

### Detailed description of invention:

It is an objective of the invention to provide a method of using a superhydrophobic and strongly oleophilic porous calcined inorganic granulated absorbent product for oil absorption wherein the absorbent element in substrate is in the form of thin-walled tubes where typically 90% of the tubes have a diameter less than 1 micron by adding the product to a permanent chemical crosslinked superhydrophobic oleophilic surface coatings by the formation of Substrate-Si-O crosslinks where the average tube diameter reduction due to surface coating is not more than 0.1 micron in which the permanent chemical crosslinked substrate Si-O crosslinks are bound to the substrate of one or more of SiO2, Al2O3, Fe2O3, TiO2, MgO, CaO, K2O and / or Na2O.

The product consists of a substrate of calcined granulate with a main constituent of diatomaceous earth, also called diatoms, and more preferably but not limited to about 1/3 of clay and preferably but not limited to 1/10 ashes. Furthermore, the product contains a permanently chemically crosslinked superhydrophobic strong oleophilic coating with an average maximum thickness of 0.05 µm by crosslinking with a polysiloxane. 1-10% siloxane, and preferably 3-5%, is dissolved in an nonpolar de-aromatized volatile hydrocarbon solvent, preferably isoalcanic, and preferably with hydrocarbon chain lengths between C10 and C18, in which substrate is placed and wetted completely , after which solvent is evaporated at a temperature above the solvent evaporation temperature, typically between 170 and 220 degrees Celsius, after which the dry substrate with the coated siloxane is heated to between 170 and 700 degrees Celsius for 15 minutes to 45 minutes, preferably the temperature is 350-400 degrees Celsius for 20-30 minutes, whereby permanent crosslinking will take place between the metal oxides of the substrate and siloxane to form a permanent chemical bond and one with a coating thickness in the range of 0.03-0.55 microns across the substrate surface.

It is an object of the invention to provide a method of using the product in that the superhydrophobic oleophilic product is placed in a filter housing or in a filter cartridge or in an open filter bed through which a surfactant liquid, preferably an alcohol is being processed, after which the product is flushed with clean water, whereby the product now has a modified hydrophilic surface through which oil contaminated process water is sprayed and whereby the product, despite wetting receives its original affinity for oil and by oil absorption displace water in pore volume in favour of oil so that all available pore volume is used for oil absorption.

Further disclosed, but not according to the invention is a method of regenerating the product by washing the product in a solvent of dearomatized volatile hydrocarbon, preferably isoalcanic solvent with hydrocarbon chain length in the range of C10 -C18, whereupon solvent is displaced with saline water in which solvent is not dissolved and in which product is washed until saline water also displaces solvent in the pore volume of the product, after which it can be reprocessed oil contaminated water through the product medium.

The product is placed as a media filter or in an open filter bed or in a filter housing or in a filter cartridge.

Disclosed, but not according to the invention is a superhydrophobic and strongly oleophilic porous calcined inorganic granulated absorbent product for oil absorption wherein the absorbent element in substrate is in the form of thin-walled tubes where typically 90% of the tubes have a diameter less than 1 micron in that the product a permanent chemical crosslinked superhydrophobic oleophilic surface coating is formed by the formation of substrate-Si-O bonds, the average tube diameter reduction due to surface coating is not reduced more than 0.1 micron in which the permanent chemical crosslinked substrate-Si-O crosslinking is bound to substrate of one or more of SiO2, Al2O3, Fe2O3, TiO2, MgO, CaO, K2O and / or Na2O.

Disclosed, but not according to the invention, there is thus obtained a new and improved superhydrophobic and highly oleophilic porous calcined inorganic granulated absorbent consisting of a substrate of calcined granulate, the main constituent is diatomaceous earth, also called diatoms, and further containing preferably, but not limited to, about 1/3 clay and containing preferably, but not limited to, around 1/10 ash.

Disclosed, but not according to the invention, there is thus obtained a new and improved superhydrophobic and highly oleophilic porous calcined inorganic granulated absorbent where permanent chemically crosslinked superhydrophobic strong oleophilic coatings forms a maximum of 0.05 micron thick coating by crosslinking with a polysiloxane.

Disclosed, but not according to the invention is a process for preparing a new and improved superhydrophobic and highly oleophilic porous calcined inorganic granulated absorbent wherein 1-10% siloxane, or preferably 3-5%, is dissolved in an nonpolar dearomatized volatile hydrocarbon solvent, preferably isoalcanic, and preferably with hydrocarbon chain lengths between C10 and C18, in which substrate is placed and wetted completely, whereafter solvent is evaporated at a temperature above solvent evaporation temperature, typically between 170 and 220 degrees Celsius, after which the dry substrate with the bonded siloxane is heated to between 170 and 700 degrees Celsius for 15 minutes to 45 minutes, preferably the temperature is 350-400 degrees Celsius for 20-30 minutes, whereby permanent crosslinking will take place between the metal oxides of the substrate and siloxane to form a permanent chemical bond and one with a coating thickness in the area about 0.03 - 0.05 microns across the substrate surface.

Disclosed, but not according to the invention, there is thus provided a process for preparing a new and improved superhydrophobic and highly oleophilic porous calcined inorganic granulated absorbent where evaporated solvent is cooled to liquid form and reused for repeated mixing and dissolution of a siloxane for new coating of untreated substrate according to the invention. According to the present invention there is thus provided a method of using a new and improved superhydrophobic and highly oleophilic porous calcined inorganic granulated absorbent where the superhydrophobic oleophilic product is placed in a filter housing or in a filter cartridge or in an open filter bed through which a surfactant liquid , preferably an alcohol being processed, after which the product is flushed with clean water, the product now having a modified hydrophilic surface through which oil-contaminated process water is sprayed and whereby the product, despite spotting, receives its original affinity for oil and by oil absorption displaces water in pore volume in favour of oil so that all available pore volume is used for oil absorption.

Disclosed, but not according to the invention is a method of regenerating a new and improved superhydrophobic and highly oleophilic porous calcined inorganic granulated absorbent where the product is washed in a solvent of dearomatized volatile hydrocarbon which is preferably isoalcanic solvent with hydrocarbon chain length in the range of C10- C18, after which solvent is displaced with saline water in which solvent is not dissolved and in which product is washed so that saline water also displaces solvent in the pore volume of the product, after which it is possible to process oil contaminated water again through the product medium.

Disclosed, but not according to the invention is a use of a product and method for a new and improved superhydrophobic and highly oleophilic porous calcined inorganic granulated absorbent where the product is placed and used as a media filter or in an open filter bed or in a filter housing or in a filter cartridge.

Disclosed, but not according to the invention is a use of the product and method for a new and improved superhydrophobic and highly oleophilic porous calcined inorganic granulated absorbent where the product is used for cleaning oil contamination from a process water flow.

Disclosed, but not according to the invention, there is thus obtained a use of the product and method for a new and improved superhydrophobic and strongly oleophilic porous calcined inorganic granulated absorbent where the product is used for absorption of oil spill.

The product is characterized in that the product is applied to a permanent chemical crosslinked superhydrophobic oleophilic surface coating by the formation of substrate-Si-O bonds where the average tube diameter reduction due to surface coating is not reduced more than 0.1 micron in which the permanent chemical crosslinked substrate Si crosslinking is bound to substrate of one or more of SiO2, A1203, Fe2O3, TiO 2, MgO, CaO, K2O and/or Na2O.

Further, the product is characterized in that the substrate consists of calcined granules, the main constituent being diatomaceous earth, also called diatoms, and more preferably about 1/3 clay, and preferably about 1/10 ash.

Further, the product is characterized in that the permanent chemically crosslinked superhydrophobic strong oleophilic coating in average creates a maximum of 0.05 micron thick coating by crosslinking to a polysiloxane.

In a method not according to the invention 1-10% siloxane, or preferably 3-5%, is dissolved in an nonpolar de-aromatized volatile hydrocarbon solvent, preferably isoalcanic, and preferably with hydrocarbon chain lengths between C10 and C18, in which substrate is placed and wetted completely, after which the solvent is evaporated, the temperature is evaporated above the solvent evaporation temperature, typically between 170 and 220 degrees Celsius, after which the dry substrate with the bonded siloxane is heated to between 170 and 700 degrees Celsius for 15 minutes to 45 minutes, preferably the temperature is 350-400 degrees Celsius for 30 minutes, whereby permanent crosslinking will take place between the metal oxides of the substrate and siloxane to form a permanent chemical bond and one with a coating thickness in the range of about 0.05 microns across the substrate surface.

Disclosed, but not according to the invention is cooling the evaporated solvent into liquid state and reuse for repeated mixing and dissolution of a siloxane for the new coating of untreated substrate according to the invention.

Further, the invention is characterized in that the superhydrophobic oleophilic product is placed in a filter bed or filter housing or in a filter cartridge through which a surfactant liquid, preferably an alcohol is being processed, after which the product is flushed with clean water, the product now having a modified hydrophilic surface through which oil contaminated process water is sprayed and whereby the product, despite wetting, receives its original affinity for oil and upon absorption displace water in pore volume in favour of oil so that all available pore volume is used for oil absorption.

Further, the product is characterized in that the product when the oil is measured is washed in a solvent of dearomatized volatile hydrocarbon which is preferably isoalcanic solvent with hydrocarbon chain length in the range of C10 -C18, whereupon solvent is displaced with saline water in which solvent is not dissolved and in which product is washed such that saline water is also displaces solvent in the pore volume of the product, after which it is possible to process oil contaminated water again through the product medium.

### Advantages of the present invention

The present product has the advantage that it can selectively absorb oil throughout the entire pore volume if oil is present in or on the water.

Furthermore, it is an advantage of the present invention that the original tubular absorbent structure of the product is not sealed by the applied hydrophobic and olefin component according to the method as application only reduces the available absorption capacity approx. 10% due to the coating thickness of only 0.05 micron. Commonly known coating technology typically creates coating thickness of 0.5 to 2 microns and will seal the thin-walled tubes of the absorbent, in which 90% of the tubes have a diameter of less than 1 micron, and absorption will then be prevented. According to experiments, the product absorbs, without hydrophobic oleophilic coating and no water, 105% oil relative to its bulk volume, and correspondingly 95% oil absorption relative to its bulk volume after application of a hydrophobic oleophilic coating.

It is also advantageous for the present product that the hydrophobic and oleophilic coatings are permanently chemically bonded, so that mechanical wear or chemical influence of process water does not affect the life of the coating.

It is also an advantage of the present product that the product which becomes superhydrophobic and strongly oleophilic retains its strong affinity for oil even after it is wetted with a surfactant such as an alcoholic, so that it recovers its hydrophilic character when it is in contact with water. The retained affinity for oil means that by filtering oil in water, the oil is absorbed as efficiently as before surfactants were applied and the present water is completely displaced from the wetted pores by oil. According to filtration tests, a product without hydrophobic and oleophilic coating absorbed only 43% of its bulk volume before saturation and break-through of oil. Product according to the invention wetted with surfactant absorbed 94% under identical conditions.

It is also an advantage of the present invention that the product can absorb with full hydraulic capacity in a wetted state, by means of a surface active substance which is primed on before first use. This allows hydraulic capacity to be maintained as for a hydrophilic medium filter. Water flow in superhydrophobic medium filters is associated with high resistance and would not work. In addition, in a filter housing or in an open filter bed, the medium would float on the surface and could not be used, but in a primed state with surfactant, the water-washed product will act as a normal sand filter where the particles are stable in the bottom of the filter.

It is a further advantage of the present invention that the solvent does not dissolve the hydrophobic oleophilic coating so that a solvent can be used to regenerate the filter mass by dissolving the oil from the pores. By using a water-soluble solvent, saline water will bypass solvent and oil and there is only a thin film of solvent left on the pore walls. This represents only about 10% further reduction in absorption capacity in repeated use, and the regenerated product will still have an absorption capacity that far exceeds other comparable absorption media such as clay, activated charcoal and walnut shell. These can absorb 30-50% of their bulk volume new and far less if they try to regenerate. With reference to the described experiments, the product according to the invention, takes up 94% oil related to bulk volume new and 85% after regeneration as illustrated in the following described tests.

It is also an advantage of the present invention that when applying the product as an absorbent for oil spills, only oil is absorbed.

It is also a surprising advantage of the present product that no oil leak occurs even from the oil-absorbed medium.

It is also an advantage of the present product that it will immediately absorb large amounts of oil with high hydraulic load. Known granulated absorbents or granulated sorbents release oil through filtration already at 1000mg / 1 of oil in water.

### Production of product for tests;

50 liters of polysiloxane were dissolved in a vessel of 950 liters of aliphatic de-aromatized hydrocarbon solvent with hydrocarbon chains C11-c15. Then 1m3 of calcined Molers of grain size 0.5-0.8 mm were added to the vessel. The mixture was left for 15 minutes to ensure complete liquid intrusion into Moler granules. Then, excess fluid was drained off. Then, solvent was evaporated at 200 degrees Celsius, cooled and recycled for reuse. The dry mass was then exposed to 400 degrees Celsius temperature for 25 minutes. The final product was then cooled.

### Test 1

Final product was tested as follows;
immersed in water for 3 months- result: still 100% hydrophobic
floating on water for 3 months- result: not a single grain sunk
Granulate immersed in pure hydrochloric acid - result: hydrophobic coating unaffected
Granulate exposed to open fire for 5 minutes - result: no change in hydrophobia

### Test 2

Four identical glasses with fine netting bottoms were filled with 1 liter of product to 10 cm filter depth.
Glass A: Untreated hydrophobic product
Glass B: Treated hydrophobic and oleophilic product
Glass C: Treated hydrophobic and oleophilic product, primed with isopropanol and flushed with water
Glass D: As glass C but previously saturated with oil, cleaned with solvent and flushed with saline water.

Production of stock solution of synthetic produced water with oil emulsion.

1 m3 synthetic, 60 degrees Celsius produced water was made with salinity of 12 %, in which in addition to NaCl2, 4000 ppm NaSO4 and 2000 ppm CaCl2, 500 ppm NaCO3- and 1000 ppm BaCl2 and 10 ppm MgCl2, were added. 4000 ppm of crude oil was sheared into a microemulsion by a high-speed multistage centrifugal pump.

Identical produced water was supplied, and the water was gravimetrically filtrated through the product and collected in the 4 transparent measuring beacons under each of the 4

### glasses A-D.

The following was observed and measured:
Glass B: No waterflow at all. The superhydrophobic surface prevented hydraulic flow through the medium.
Glass A: Smooth waterflow and oil break through at 44% saturation relative to volume of oil/filter medium.
Glass C: Smooth water flow identical to glass A, but oil break through occurred at 94% saturation relative to volume oil/filter medium
Glass D: Slightly less flow, and oil break-through occurred at 85 % saturation relative to oil/filter medium.

This shows that the product works as described and that the present filter medium absorbs more than twice as much oil from water according to the invention, processed form of the product, even after regeneration according to the invention. It is also shown that the product, absorbs 85-95% of its bulk volume as a water filter, while other known filter medium absorbents absorb 40-50 % of their bulk volumes.

### Test 3

1 liter of oil spill in a vessel of 10 liters of water was sprinkled with 1.1 liters of product according to the invention. All oil was absorbed. Oil / absorbent sank to the bottom, and an indication that all oil was absorbed was when absorbent grain began to float on the surface. When 8-10 grains floated without sinking, it showed that there is no oil film on the surface that would result in saturation of the grains with subsequent sinking.

A fast stirrer was used in the vessel that whipped up the used absorbent mass, for each day for 2 weeks. No oil floated to the surface of the water, and it could be observed that a small amount of grain absorbent flowed without sinking. No absorbent leakage was observed during the 2 weeks.

## Claims

1. A method of using a superhydrophobic and strongly oleophilic porous calcined inorganic granulated absorbent product for oil absorption, **characterized in that** the superhydrophobic oleophilic product
a. consists of calcined granulate whose main constituent is diatomaceous earth having thin walled tubes where typically 90% of the tubes have a diameter of less than 1 micron, **characterized in that** the product is added a permanent chemical crosslinked superhydrophobic oleophilic surface coating upon formation of substrate - Si -O bonds where the average tube diameter reduction due to surface coating is not more than 0.1 micron in which the permanent chemical crosslinked substrate Si-O crosslinks are bound to the substrate by one or more of SiO2, Al2O3, Fe2O3 , TiO2, MgO, CaO, K2O and / or Na2O,
b. wherein the coating is a coating with an average maximum thickness of 0.05 µm by crosslinking with a polysiloxane, and
c. wherein the product is arranged in a filter bed, or in a filter housing, or in a filter cartridge, through which a surface active liquid, preferably an alcohol is being processed, after which the product is flushed clean with pure water whereby the product now has a modified hydrophilic surface through which oil contaminated process water is processed and whereby the product, despite wetting, maintain its original affinity for oil and by means of absorption displaces water in the pore volume in favour of oil so that all available pore volume is used for oil absorption.

## Patentansprüche

1. nspruch 1 Verfahren zur Verwendung eines superhydrophoben und stark oleophilen porösen kalzinierten anorganischen granulierten absorbierenden Produkt zur Ölabsorbtion, **dadurch gekennzeichnet, dass** das superhydrophobe oleophile Produkt
a. aus kalziniertem Granulat besteht, dessen Hauptbestandteil Kieselerde ist, welche dünnwandige Röhren aufweist, wobei typischerweise 90 % der Röhren einen Durchmesser von weniger als 1 Mikrometer aufweisen, **dadurch gekennzeichnet, dass** das dem Produkt bei der Bildung von Substrat-Si-O-Verbindungen eine permanente chemische quervernetzte superhydrophobe oleophile Flächenbeschichtung hinzugefügt wird, wobei die Reduktion des durchschnittlichen Röhrendurchmessers aufgrund einer Flächenbeschichtung nicht mehr als 0,1 Mikrometer beträgt, wobei die permanent chemisch quervernetzten Substrat-Si-O-Quervernetzungen durch eine oder mehrere von SiO2, Al2O3, Fe2O3, TiO2 MgO, CaO, K2O und/oder Na2O an das Substrat gebunden ist,
b. wobei die Beschichtung eine Beschichtung mit einer durchschnittlichen maximalen Dicke von 0,05 µm ist, indem es mit einem Polysiloxan quervernetzt, und
c. wobei das Produkt in einem Filterbett angeordnet ist, oder in einem Filtergehäuse, oder in einer Filterkartusche, durch welche ein aktives Liquid einer Fläche, vorzugsweise ein Alkohol, prozessiert wird, wonach das Produkt mit reinem Wasser saubergespült wurde, wodurch das Produkt nun eine modifizierte hydrophile Fläche aufweist, durch welche ölverschmutztes Prozesswasser prozessiert wird und wodurch das Produkt, trotz eines Anfeuchtens, seine ursprüngliche Affinität für Öl beibehält und durch Absorption Wasser in dem Porenvolumen zugunsten des Öls verdrängt, so dass das gesamte verfügbare Porenvolumen zur Ölabsorption verwendet wird.

## Revendications

1. Procédé d'utilisation d'un produit absorbant granulé inorganique calciné poreux superhydrophobe et fortement oléophile pour l'absorption d'huile, **caractérisé en ce que** le produit oléophile superhydrophobe
a. consiste en un granulat calciné dont un constituant principal est la terre de diatomées ayant des tubes à parois minces où typiquement 90 % des tubes ont un diamètre de moins de 1 micron, **caractérisé en ce que** le produit est ajouté à un revêtement de surface oléophile superhydrophobe réticulé chimiquement de façon permanente lors de la formation de liaisons substrat-Si-O où la réduction de diamètre de tube moyenne due au revêtement de surface n'est pas supérieure à 0,1 micron, dans lequel les réticulations substrat Si-O réticulées chimiques permanentes sont liées au substrat par un ou plusieurs de SiO2, Al2O3, Fe2O3, TiO2, MgO, CaO, K2O et/ou Na2O,
b. dans lequel le revêtement est un revêtement avec une épaisseur maximale moyenne de 0,05 µm par réticulation avec un polysiloxane, et
c. dans lequel le produit est agencé dans un lit filtrant, ou dans un boîtier filtrant, ou dans une cartouche filtrante, à travers lequel un liquide tensioactif, de préférence un alcool, est traité, après quoi le produit est nettoyé par rinçage avec de l'eau pure, moyennant quoi le produit a maintenant une surface hydrophile modifiée à travers laquelle une eau de traitement contaminée par de l'huile est traitée, et moyennant quoi le produit, malgré le mouillage, maintient son affinité d'origine pour l'huile et, par absorption, déplace l'eau dans le volume des pores au profit de l'huile de sorte que tout le volume disponible des pores est utilisé pour l'absorption de l'huile.
